**Europäisches Patentamt**

**European Patent Office**

**Office européen des brevets**

(19)

(11) Veröffentlichungsnummer: **0 092 719**

**B1**

(12) # EUROPÄISCHE PATENTSCHRIFT

(45) Veröffentlichungstag der Patentschrift:
23.07.86

(21) Anmeldenummer: **83103450.9**

(22) Anmeldetag: **08.04.83**

(51) Int. Cl.⁴: **G 06 F 15/16**, G 06 F 11/20

(54) **Anordnung zur Kopplung von digitalen Verarbeitungseinheiten.**

(30) Priorität: **22.04.82 DE 3215080**

(43) Veröffentlichungstag der Anmeldung:
**02.11.83 Patentblatt 83/44**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**GB-A-2 064 839**
**US-A-4 245 344**

**SIMULATION, Band 31, Nr. 5, November 1978, Seiten 145-153, La Jolla, USA L.D. WITTIE: "Micronet: A reconfigurable microcomputer network for distributed systems research" COMPCON FALL 1979, 19th IEEE COMPUTER SOCIETY INTERNATIONAL CONFERENCE, 4.-7. September 1979, Seiten 349-356, New York, USA C.A. MONSON et al.: "A cooperactive highly-available multi-processor architecture CHAMP"**

(73) Patentinhaber: **Siemens Aktiengesellschaft, Berlin und München Wittelsbacherplatz 2, D-8000 München 2 (DE)**

(72) Erfinder: **Bär, Albrecht, Dipl.- Ing., Weiselstrasse 42, D-8520 Buckenhof (DE)**

**Beschreibung**

Die vorliegende Erfindung bezieht sich auf eine Anordnung zur Kopplung von digitalen Verarbeitungseinheiten gemäß dem ersten Teil des Hauptanspruches. Eine derartige Anordnung ist bekannt nach Simulation, Band 31, Nr. 5, Nov. 1978, Seiten 145 bis 153. Zwar läßt sich mit der bekannten Anordnung unter Vermeidung zentraler Steuereinrichtungen der Datenverkehr zwischen den einzelnen Modulen des Systems abwickeln, dieser verläuft aber weitgehend undeterminiert, d. h., das jeweils anzusprechende Empfängermodul könnte prinzipiell sowohl über einen von dem originär sendenden Modul, d. h. direkt gespeisten Bus als auch über einen von einem weitersendenden Modul beaufschlagten, d. h. sekundär gespeisten Bus erreicht werden. Eine insbesondere bei ausgedehnten Busnetzen anzustrebende, möglichst quellennahe Informationsversorgung kann mit der bekannten Anordnung also nicht sichergestellt werden, was die vorliegende Erfindung sich zur Aufgabe stellt.

Gelöst wird diese Aufgabe erfindungsgemäß durch die im zweiten Teil des Hauptanspruches angegebenen Merkmale.

Auf diese Weise kann jedes autonom seinen Teil zu einer optimalen Informationsverteilung beitragen, ohne daß es hierzu einer zentralen Steuereinrichtung bedarf.

Weitere Ausgestaltungen der Erfindung sind in Unteransprüchen gekennzeichnet und sollen nachstehend anhand der Figuren näher erläutert werden. Dabei zeigt:

Fig. 1 den prinzipiellen Aufbau einer dem eingangs erwähnten Stand der Technik . entnehmbaren Kopplungsanordnung, von welcher die Erfindung ausgeht,

Fig. 2 bis 4 die netztopologischen Auswirkungen der erfindungsgemäßen Kopplung anhand eines Beispiels,

Fig. 5 den prinzipiellen Aufbau eines Moduls samt seiner Kopplungen,

Fig. 6 eine Schaltung zur Erzeugung der Statussignale,

Fig. 7 ein Ausführungsbeispiel für die Richtungssteuerung,

Fig. 8 eine Ausführungsform der bidirektionalen Koppler und

Fig. 9 ein Blockschaltbild für eine analoge Erweiterung der erfindungsgemäßen Koppelanordnung zur Fehlerbehandlung und Stromversorgung der Module.

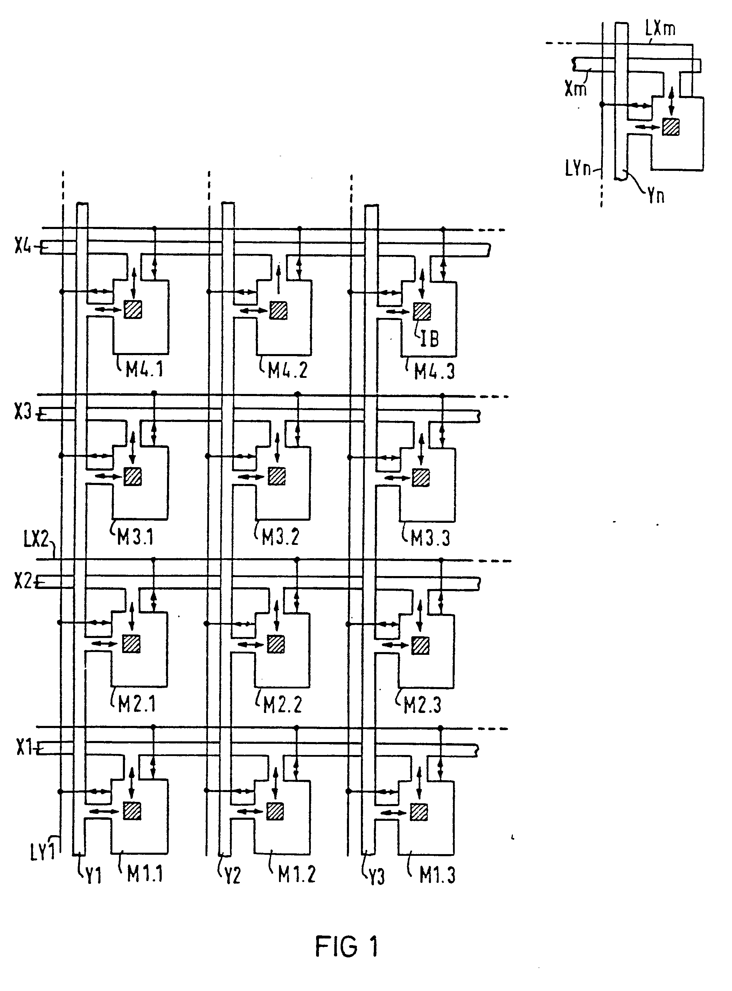

Fig. 1 zeigt den prinzipiellen Aufbau einer dem eingangs erwähnten Stand der Technik entnehmbaren Kopplungsanordnung, von welcher die Erfindung ausgeht. Es ist eine erste Gruppe von, horizontal verlaufend dargestellten, Bussen X1 bis Xm und eine zweite Gruppe von, vertikal verlaufend dargestellten, Bussen Y1 bis Yn vorgesehen, welche jeweils mit den internen Bussen IB von digitalen Verarbeitungseinheiten (M1.1 - Mn.m) mittels nur angedeutet dargestellter Koppelglieder bidirektional koppelbar sind. Als digitale Verarbeitungseinheiten, im folgenden kurz Module genannt, werden beliebige busorientierte Einrichtungen, wie Speicherteile, Prozessoren für Verarbeitung, Prozessoren für Ein/Ausgabe usw, verstanden. Die Zuordnung zu den einzelnen Bussen ist dabei matrixartig, d.h. jeder Modul ist mit einem Bus der einen Gruppe und einem Bus der anderen Gruppe, jedoch keine zwei Module an dieselben zwei Busse koppelbar. Auf diese Weise kann jeder Modul von den zwei ihm zugeordneten Bussen empfangen bzw. auf diese senden, wobei die Buszuteilung an sendewillige Module in nicht näher dargestellter, jedoch an sich bekannter Weise mittels moduleigener Bus-Arbiter dezentral erfolgt, beispielsweise wie in der Zeitschrift "Elektronik", Heft 1, 1981, S.81-85 angegeben. Jeder Modul kann außerdem die zwei ihm zugeordneten Busse in beiden Informationsflußrichtungen miteinander verbinden, d.h. zur Übertragungsbrücke zwischen diesen beiden Bussen werden und zweckmäßigerweise dabei die empfangene Information relaisartig auffrischen.

Ist auf beiden, einem nicht originär sendenden Modul zugeordneten Bussen bereits schon dieselbe Information vorhanden, ist eine Kopplung von Bus zu Bus durch die Koppeleinrichtung dieses Modul entbehrlich. Zudem könnten durch Laufzeiteffekte bedingte Signalverfälschungen nicht ausgeschlossen werden, wenn das Modul die Information auf zwei unterschiedlich langen Übertragungswegen empfängt, welche durch eine unterschiedliche Distanz zwischen dem jeweils originär sendenden Modul und den beiden, dem nicht sendenden Modul zugeordneten Bussen bedingt sind. Es ist daher zweckmäßig, die Kopplungssteuerung so auszubilden, daß bei gleichem Signalzustand zweier Busstatusleitungen der interne Bus des zugeordneten Moduls für den Fall, daß es nicht sendet, stets nur mit dem einer bestimmten Gruppe zugehörigen Bus, beispielweise dem der Y-Gruppe zugehörigen Bus, gekoppelt wird. Damit wird also bei den Modulen eine Doppeleinspeisung und bei den Bussen eine Mehrfachspeisung über nicht originär sendende Module vermieden. Stets steht jedoch jedem nicht originär sendenden Modul ein zweiter Übertragungsweg zur Verfügung, der bei Ausfall des anderen jederzeit aktiviert werden kann.

Bei der in Figur 1 dargestellten Anordnung verläuft die Informationsausbreitung von einem originär sendenden Modul zu den übrigen Modulen weitgehend undeterminiert, d.h. das jeweils anzusprechende Empfängermodul könnte prinzipiell sowohl über einen von dem originär sendenden Modul, d.h. direkt gespeisten Bus, als auch über einen von einem weitersendenden Modul beaufschlagten, d.h. sekundär gespeisten, Bus erreicht werden. Eine insbesondere bei ausgedehnten Busnetzen anzustrebende, möglichst quellennahe Informationsversorgung kann mit einer weiteren Busstatusleitung pro Bus erreicht werden, welche dann Signal führt, wenn der jeweilige Bus von einem weitersendenden Modul, d.h. sekundär, gespeist ist. Die Kopplungsrichtungssteuerungen der Module werden dann so ausgebildet, daß vorrangig die Information primär gespeister Busse von den Modulen weitergesendet wird. Mit Hilfe dieser zweiten Statusleitung kann jedes Modul autonom seinen Teil zu dieser, eine optimale Informstionsverteilung bewirkenden hierarchischen Kopplung beitragen, ohne daß es hierzu einer zentralen Steuereinrichtung bedarf.

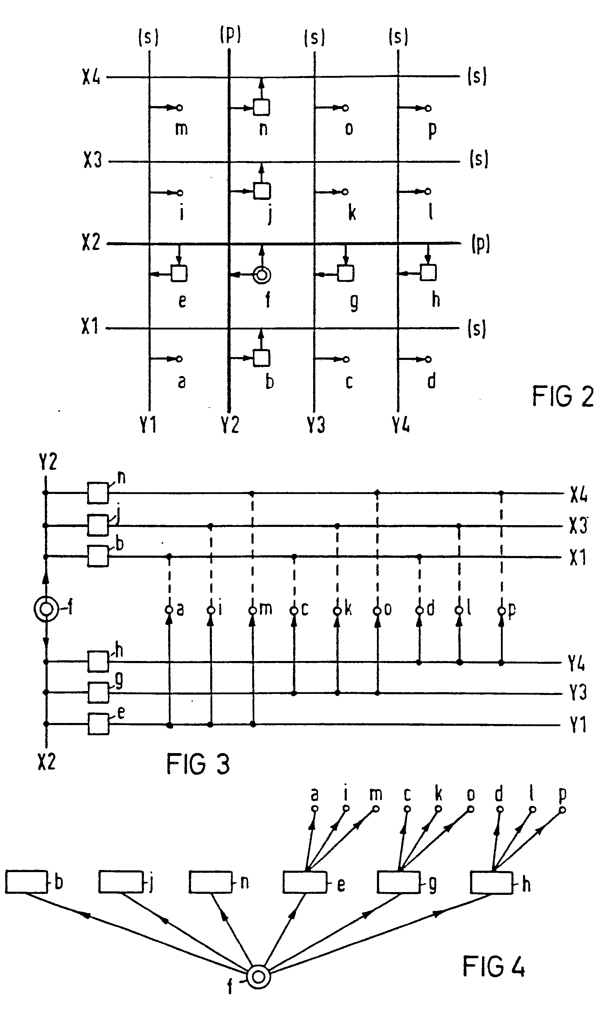

Die Figuren 2 bis 4 zeigen die netztopologischen Auswirkungen dieser Kopplung anhand eines Beispiels. Die in Figur 2 dargestellte Busmatrix besteht aus den vertikalen Bussen Y1 bis Y4 und den horizontalen Bussen X1 bis X4, deren jeder von der besseren Übersicht halber nicht dargestellten Statusleitungen begleitet wird, welche in der zuvor angegebenen Weise beaufschlagt und deren Signalzustände in den einzelnen Modulen ausgewertet werden. Die Module des Systems sind durch ihre mit a bis p bezeichneten internen Busse und die aktivierten moduleigenen Koppler durch Pfeile entsprechender Richtung repräsentiert. Beim angenommenen Betriebsfall möge der Modul f originär senden, d.h. die Busse X2 und Y2 werden von ihm als Informationsquelle primär eingespeist. Dieser originär sendende Modul f bewirkt auf den ersten Busstatusleitungen der Busse X2 und Y2 ein Signal, welches diese als primär gespeist (p) kennzeichnet. Mittels dieses Signals werden die Richtungssteuerungen in den Modulen e, g, h, und b, j und n feststellen, daß einer der beiden ihnen zugeordneten Busse primär gespeist ist und der andere nicht, worauf die Richtungssteuerung die Kopplung der Busse Y2 mit den Bussen X1, X3 und X4 mit dem Vertikalbus Y2 und die Kopplung der Busse Y1, Y3 und Y4 mit dem Horizontalbus X2 vornimmt. Die entsprechenden zweiten Busstatusleitungen erhalten daraufhin ein Signal, welches die Busse Y1, Y3 und Y4 sowie X1, X3 und X4 als sekundär gespeist (s) kennzeichnet, welches wiederum die restlichen Module, bei denen jeweils die beiden ihnen zugeordneten Busse durch ihre zweiten Statusleitungen als sekundär gespeist gekennzeichnet sind, veranlaßt, sich jeweils nur an die Busse einer vorbestimmten Gruppe, im Beispiel der Figur 2 an die Gruppe der vertikalen Busse, anzukoppeln.

Figur 3 zeigt eine Darstellung des Koppelzustandes gemäß Figur 2, bei welcher die nicht aktivierten, jedoch in Bereitschaft stehenden Übertragungswege, gestrichelt eingezeichnet sind. Daraus wird deutlich, daß die Informstionsquelle - für den angenommenen Fall der interne Bus des Moduls f - mit allen Übrigen Modulen über jeweils nur einen Weg verbunden ist, daß jeder Bus nur einfach eingespeist ist, daß auf allen Übertragungswegen, d.h. allen Bussen die gleiche Information vorhanden ist und daß jeder Modul bei Ausfall eines der in Figur 3 aktiven Übertragungswege durch Aktivierung eines der gestrichelt gezeichneten Übertragungswege jederzeit über einen zweiten Weg von der Signalquelle erreichbar ist.

Figur 4 zeigt die baumartige Struktur der Informationsübertragungswege mit der Informationsquelle f als Wurzel. Wesentlich ist, daß innerhalb des in Figur 2 dargestellten Modulverbundsystems jeder einzelne Modul zu einer solchen Signalquelle werden kann und ausschließlich mit der moduleigenen Richtungssteuerung der Koppler selbsttätig die in Figur 4 dargestellte stichkanalartige Verbindung von der jeweiligen Signalquelle bis zu jedem Modul des Matrixbusnetzes aufgebaut wird. Der erfindungsgemäße Matrixbus dürfte daher auch für sogenannte lokale Netze (local networks) bzw. Datenkommunikation zwischen mehreren Datenverarbeitungseinheiten mit Vorteil verwendbar sein.

Wichtig bei allen Mehrrechnersystemen ist die Erkennung und Identifizierung von Fehlern mit darauffolgender Ausschließung der defekten Teile von der weiteren Signalverarbeitung. Da jedem Modul die Informstionen der zwei ihm zugeordneten Busse zur Verfügung steht und allen Bussen durch die zuvor beschriebene Richtungssteuerung im ungestörten Fall immer dieselbe Information vorhanden sein muß, kann in jedem Modul ein Störungsfall erkannt werden. Zwar könnte es genügen, die beiden Businformationen miteinander zu vergleichen, wozu pro Modul nur ein Komparator vorzusehen wäre. Vorzuziehen ist jedoch, in eine Fehlerüberwachung auch noch die einwandfreie Funktion der bidirektionaler Koppler selbst miteinzubeziehen, wozu pro Modul zwei Komparatoren vorgesehen werden, welche jeweils vor und hinter jedem der beiden bidirektionalen Koppler den Signalzustand überwachen. Die Ausgangssignale der Komparatoren sämtlicher Modulen werden auf eine allen Modulen gemeinsame Fehlersammelleitung gegeben. In jedem Modul bzw. in seiner Koppeleinheit ist nun ein Fehlerprozessor vorhanden, der eingangsseitig an die Fehlersammelleitung angeschlossen ist und bei Auftreten eines von einem beliebigen Modul ausgelösten Fehlersammelsignals zum Start eines Fehlersuchprogramms veranlaßt wird. Jedem Modul wird eine Kennummer zugeteilt, so daß mit diesem für alle Fehlerprozessoren identischen Fehlersuchprogramm bestimmte Module oder Modulgruppen nacheinander probeweise abgeschaltet und auf diese Weise der aufgetretene Fehler lokalisiert werden kann. Damit die Fehlerbehandlungsprogramme der einzelnen moduleigenen Fehlerprozessoren synchron bzw. koordiniert ablaufen können, enthalten die Koppeleinheiten jeweils Taktgeber, welche sich über eine gemeinsame, gegebenenfalls mehrfach redundant gesicherte, Taktleitung gegenseitig synchronisieren.

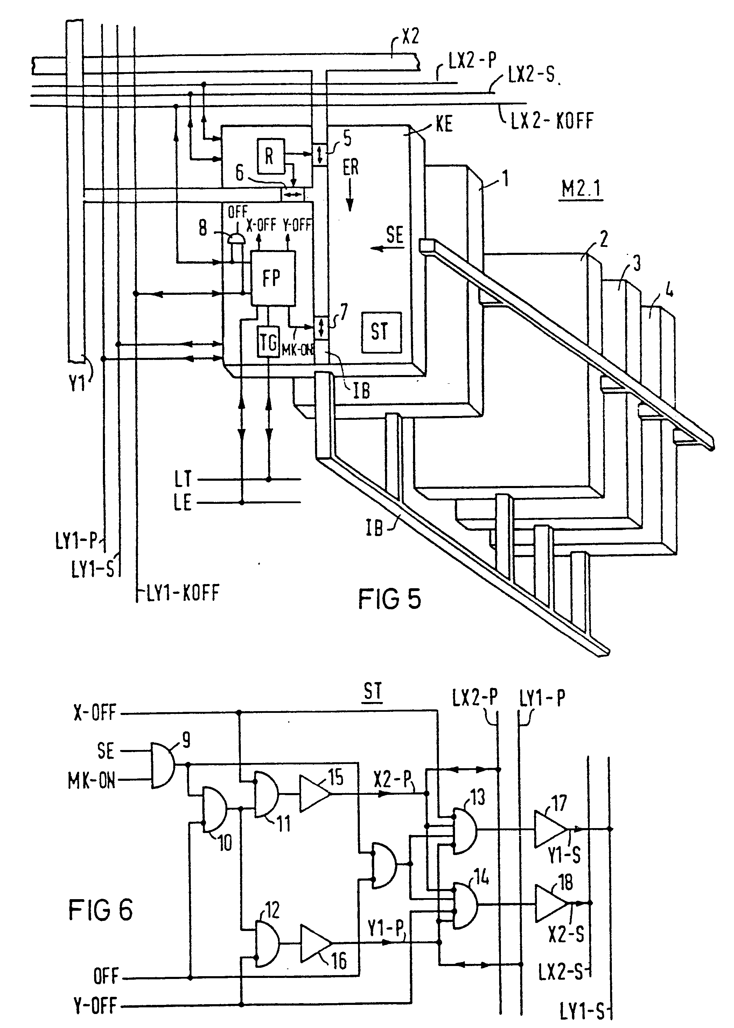

Figur 5 zeigt nun im einzelnen den prinzipiellen Aufbau eines Moduls samt seiner Kopplungen mit den ihm zugeordneten Bussen und den externen Signalleitungen. Der in Figur 5 dargestellte Modul M2.1 ist stellvertretend für sämtliche Module des Koppelsystems, so daß sich mit ihm unter Berücksichtigung der Figur 1 auch der Gesamtaufbau ergibt. Der Modul weist einen mit IB bezeichneten internen Bus auf, an welchem in üblicher Weise nicht näher spezifizierte digitale Baugruppen, wie Zentraleinheit, Speichergruppen, Sendeverstärker usw, angeschlossen sind, welche sich auf Platinen 1 bis 4 befinden. Der Modul weist weiterhin eine Koppeleinheit KE auf, welche zwei bidirektionale Koppler 5 und 6 enthält, mit welchen über einen weiteren bidirektionalen Koppler 7 der interne Bus IB in Sende- oder Empfangsrichtung mit einem oder beiden dem Modul M2.1 zugeordneten Bussen X2 bzw. Y1 gekoppelt werden kann. Eine im späteren noch näher detailliert beschriebene Richtungssteuerung R steuert dabei die Informationsflußrichtung durch die bidirektionalen Koppler 6, während der Koppler 7 von einem in der Koppeleinheit KE befindlichen Fehlerprozessor FP gesteuert wird. Der zeitliche Ablauf des von dem Fehlerprozessor FP abzuarbeitenden Fehlersuch- und Behandlungsprogramms wird von einem Taktgeber TG bestimmt bzw. koordiniert, dessen Taktsignal auch auf eine allen Modulen gemeinsame Taktleitung LT gegeben wird und welcher seinerseits die auf dieser Taktleitung erscheinenden Signale auswertet. Auf diese Weise kann erreicht werden, daß sich die in den übrigen Modulen befindlichen Taktgeber gegenseitig synchronisieren, so daß eine Ablaufkoordinierung der in den moduleigenen Fehlerprozessoren ablaufenden Fehlersuchprogramme erreicht wird. Sich gegenseitig mittels einer gemeinsamen Taktleitung synchronisierende Taktgeber sind an sich bekannt, beispielsweise gemäß der DE-AS 21 55 159.

Die Koppeleinheit KE enthält weiterhin noch eine mit ST bezeichnete Einrichtung zur Kennzeichnung des Speisezustandes der Busse Y1 und X2, wobei von dieser Schaltung dann ein Signal auf die Busstatusleitungen LY1-P und LX2-P gegeben wird, wenn aus dem Modul über seinen internen Bus IB gesendet werden soll, was durch das im Modul erzeugte Sendesignal SE eingeleitet wird. Für den Fall, daß das Sendesignal SE nicht vorhanden, d.h. ein Null-Signal ist und nur eine der Leitungen LX2-P oder LY1-P aufgrund eines anderen originär auf diesen Bus sendenden Moduls ein L-Signal aufweist, werden mittels der Richtungssteuerung R die bidirektionalen Koppler 5 und 6 so gesteuert, daß der primär gespeiste Bus den anderen speist. Die Statusschaltung ST gibt dann auf die Busstatusleitung LY1-S bzw. LX2-S ein L-Signal, womit dieser Bus als sekundär gespeist gekennzeichnet ist. Die Signalzustände der Busstatusleitungen - im dargestellten Beispiel die Leitungen LY1-P, LY1-S, LX2-P und LX2-S - werden in jedem Modul zur Steuerung der Koppler 5 und 6 ausgewertet. Zur Abschaltung ein oder mehrerer programmgesteuert bestimmter Module gibt der Fehlerprozessor FP jeweils nur in der moduleigenen Koppeleinheit wirkende Abschaltsignale X-OFF und Y-OFF aus, mit denen die bidirektionalen Koppler 5 bzw. 6 vom X-Bus bzw. vom Y-Bus abgekoppelt werden können. Der Fehlerprozessor kann weiterhin das Signal MK-ON ausgeben, welches auf den bidirektionalen Koppler 7 wirkt und den internen Bus IB ankoppelt.

Für das nach dem Auftreten eines Signals in der Fehlersammelleitung LE in allen Fehlerprozessoren der Modulen gleichzeitig ablaufende Fehlerbehandlungsprogramm gibt es verschiedene mögliche Ausgestaltungen. Als zweckmäßig erweist sich, wenn beim probeweisen Ausschalten der einzelnen Komponenten mit den kleinsten erkennbaren Ausfalleinheiten, nämlich den internen Bussen bzw. den von ihnen versorgten Modulbaugruppen 1 bis 4 begonnen wird. Man kann also von den Fehlerprozessoren nacheinander mittels der von ihnen erzeugten Abschaltsignale MK-ON Modul für Modul nacheinander durch Sperren der entsprechenden bidirektionalen Koppler 7 probeweise ab- und wieder ankoppeln, bis das Fehlersignal auf der Fehlersammelleitung LE verschwindet. Möglich ist es auch, mittels sukzessiver Approximation mit Modulgruppen in dieser Weise zu verfahren, d.h. in einem Programmschritt gleichzeitig z.B. die Hälfte aller Modulen durch Sperren ihrer bidirektionalen Koppler 7 ab- und anzukoppeln, sodann von der anderen Hälfte wiederum die Hälfte usw. Auf diese Weise kann der Fehler recht schnell eingekreist, der defekte Modul erkannt und derselbe dann bleibend abgeschaltet werden. Wesentlich ist, daß bei einer solchen Fehlersuche die Koppelfunktion der bidirektionalen Koppler 5 und 6 und damit die Informationsversorgung der nicht abgeschalteten Module erhalten bleibt. Sollte der Fehler bei diesen Probeabschaltungen nicht gefunden worden sein, so könnte ein nächster zweckmäßiger Schritt darin bestehen, mittels gleichzeitiger Ausgabe der internen Abschaltsignale X-OFF und Y-OFF die Module durch Sperren der bidirektionalen Koppler 6 und 5 nacheinander punktuell von den beiden dem Modul zugeordneten Bussen zu trennen. Auf diese Weise können Fehler in den bidirektionalen Kopplern 5 und 6 erkannt werden. Busfehler können lokalisiert werden, wenn in einem Programmschritt gleichzeitig in allen einem Bus zugeordneten Modulen durch Ausgabe eines ihrer beiden internen Abschaltsignale X-OFF bzw. Y-OFF ihre entsprechenden bidirektionalen Koppler 5 bzw. 6 gesperrt werden.

Diese Abschaltversuche werden von den moduleigenen Fehlerprozessoren veranlaßt und mit den internen Schaltsignalen X-OFF, Y-OFF und MK-ON bewirkt. Für den Fall, daß der moduleigene Fehlerprozessor defekt ist und die von ihm verlangten Abschaltungen nicht mehr bewerkstelligen kann, ist pro Bus eine externe Abschaltleitung vorgesehen, welche im dargestellten Beispiel mit LX2-KOFF und LY1-KOFF bezeichnet ist. Diese Abschaltleitungen werden nun ebenfalls programmgesteuert von den Fehlerprozessoren der diesen Bussen zugeordneten Modulen beschickt und deren Signale X2-KOFF und Y2-KOFF werden in einem

oduleigenen Gatter 8 konjunktiv miteinander verknüpft. Führen beide der die zugeordneten Busse begleitenden Abschaltleitungen L-Signale, dann tritt am Ausgang des UND-Gatters 8 das Signal OFF auf, mit welchem eine Generalabschaltung des Moduls, d.h. ein gleichzeitiges Sperren der bidirektionalen Koppler 6 und 5 bewirkt wird. Zum Unterschied zu den vom moduleigenen Fehlerprozessor bewirkten Abschaltungen wird nunmehr die Abschaltung eines Moduls von den Fehlerprozessoren seiner an den gleichen Bussen angekoppelter Nachbarmodule bewirkt.

Die Figuren 6 bis 8 zeigen beispielhafte Realisierungsmöglichkeiten für die in Figur 5 dargestellten Elemente der Koppeleinheit KE,

Gemäß Figur 6 enthält die Statusschaltung ST zur Erzeugung der Statussignale X2-P, X2-S, Y1-P und Y2-S der den X-Bus und den Y-Bus dieses Moduls begleitenden Statusleitungen LX2-P und LY1-P Gatter 9 bis 14 und Sendeverstärker 15 bis 18. Soll der Modul originär senden (Signal SE = L und MK-ON = L), sind die Gatter 13 und 14 gesperrt und die Signale X2-P und Y1-P werden auf Leitungen LX2-P und LY1-P gegeben. Führen diese Leitungen - veranlaßt durch das Senden eines anderen Moduls - bereits L-Signale, so werden an den Gattern 13 und 14 jeweils L-Signale erscheinen und die Sendeverstärker 17 und 18 geben entsprechende, eine sekundäre Speisung der Busbegleiter LX2-S und LY1-S kennzeichnende Signale aus. Die Aussendung von Busstatussignalen wird verhindert, falls die vom moduleigenen Fehlerprozessor erzeugten Abschaltsignale Y-OFF bzw. X-OFF erscheinen sowie wenn das von den Fehlerprozessoren der Nachbarmodule bewirkte Generalabschaltsignal OFF auftritt.

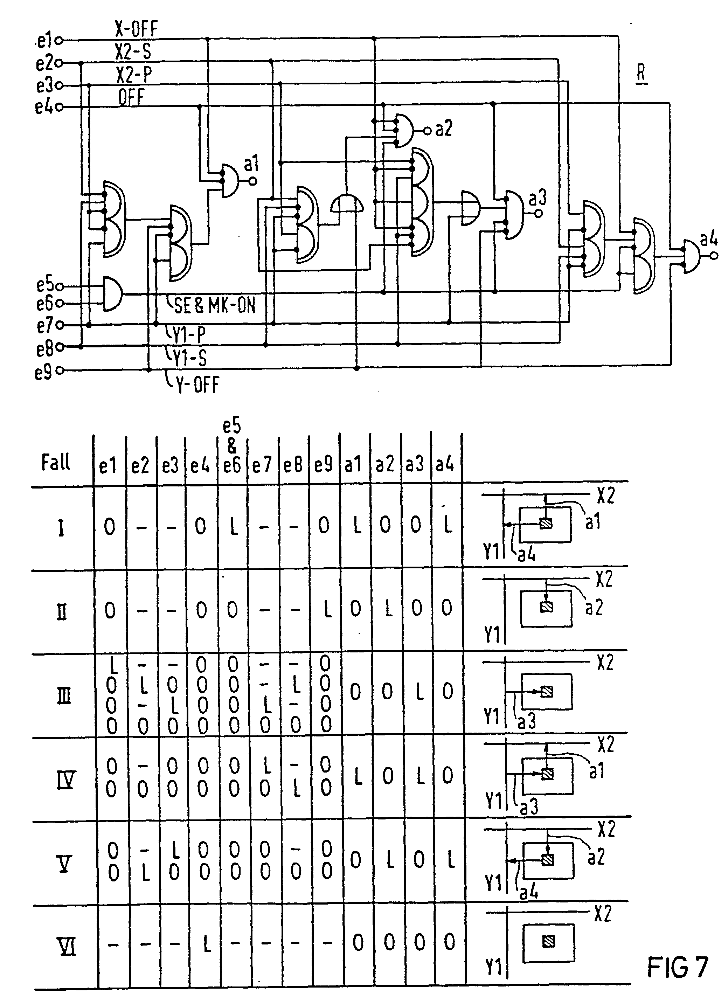

Im oberen Teil der Figur 7 ist die Innenschaltung der Richtungssteuerung R dargestellt, welche die Gatter 19 bis 31 enthält, welche von den an den Eingangsklemmen e1 bis e9 anliegenden Signalen X-OFF, X2-S, X2-P, OFF, Y1-P, Y1-S und Y1-OFF beaufschlagt werden. Das Gatter 20 weist ein L-Signal auf, wenn beide der an den Eingangsklemmen e5 und e6 zugeführten Signale SE und MK-ON ein L-Signale sind. Die Gatter 19, 23, 26, 29 und 30 sind als sogenannte Kombinationsgatter dargestellt, d.h. sie bestehen aus der ODER-Verknüpfung der Ausgangssignale zweier UND-Gatter. Ein Punkt bei einem Gattereingang soll in üblicher Weise eine Invertierung des zugeführten Signals bedeuten. Die Signale an den Ausgangsklemmen a1 bis a4 der Gatter 22, 25, 28 und 31 sind den Datentoren der bidirektionalen Koppler 5 und 6 zugeordnet und zwar sind diese jeweils dann durchlässig geschaltet, wenn die Signale a1 bis a4 an den Ausgangsklemmen jeweils L-Signale sind. Die sich aus diesem Schaltbild ergebende Wirkungsweise der Richtungssteuerung R ist im unteren Teil der Figur 7 anhand einer Signaltabelle sinnfällig dargestellt. Diese zeigt die an den vier Ausgangsklemmen a1 bis a4 auftretenden Signale als Folge einer jeweils zugeordneten Signalkombination der Signale an den Eingangsklemmen e1 bis e9 für die möglichen Kopplungsfälle I - VI, welche in der letzten Spalte dieser Tabelle graphisch wiedergegeben sind. Diese Spalte zeigt jeweils die dem Modul M2.1 zugeordneten Busse X2 und Y1, seinen internen Bus, sowie diejenigen Ausgangsklemmen der Richtungssteuerung R, welche für die mittels eines Pfeiles angegebene Kopplungsrichtung zur entsprechenden Betätigung der Datentore der bidirektionalen Koppler 5 und 6 im jeweiligen Kopplungsfall L-Signale aufweisen müssen. Die für die einzelnen Kopplungsfälle erforderlichen Kombinationen der Signale an den Eingangsklemmen e1 bis e9 sind im linken Teil der Tabelle dargestellt. In einer Zeile nebeneinanderstehende Signalbedingungen müssen in UND-Verknüpfung erfüllt sein. Ein Strich bedeutet, daß für den zu realisierenden Betriebsfall der Wert des entsprechenden Eingangssignals bedeutungslos ist. Bei den Kopplungsfällen III-V sind mehrere Kombinationen der Eingangssignale an den Klemmen e1 bis e9 untereinander zeilenweise angeordnet, was bedeuten soll, daß für diesen Betriebsfall entweder die Kombination der einen oder der anderen Zeilen zu erfüllen ist. Bemerkenswert ist beim Kopplungsfall III die Signalkombination in dessen zweiter Zeile, die beiwkrt, daß für den Fall, daß beide dem Modul zugeordneten Busse sekundär gespeist sind, der Modul in Empfangsrichtung nur an den der Y-Gruppe zugehörigen Y1-Bus angekoppelt ist. Beim Kopplungsfall VI wird die Wirkung des Generalabschaltsignals OFF an der Eingangsklemme e4 deutlich, welches den internen Bus des Moduls vollständig isoliert.

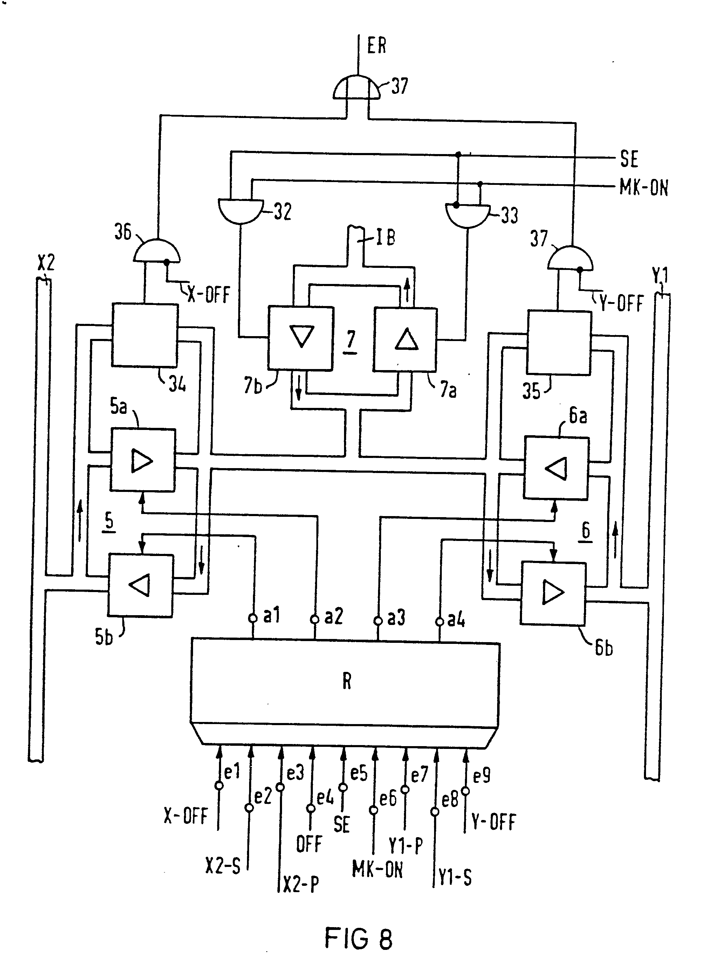

Figur 8 zeigt die Anordnung der Datentore 5a, b und 6a, b der bipolaren Koppler 5 bzw. 6 sowie die Einrichtung zur Bildung des Fehlersignals ER. Die Datentore 5a und 5b bestehen aus Sendeverstärkern, welche für Datenflüsse in den jeweils angegebenen Pfeilrichtungen durch die Signale an den Ausgangsklemmen a1 bis a4 der Richtungssteuerung R durchlässig geschaltet werden können. Der interne Bus IB des Moduls ist ebenfalls über zwei solcher Verstärker 7a bzw. 7b des bidirektionalen Kopplers 7 an die beiden bidirektionalen Koppler 5 und 6 angeschlossen, welche von den Ausgangssignalen der UND-Gatter 32 und 33 nach Bedarf durchlässig steuerbar sind. Ist der Modul betriebsbereit (Signal MK-ON = 1) und will er senden, so ist das Signal SE ein L-Signal und das Datentor 7b wird vom Ausgangssignal des UND-Gatters 32 durchlässig gesteuert. Die Richtungssteuerung R steuert mit den Signalen an ihren Ausgangsklemmen a1 bis a4, wie im Zusammenhang mit Figur 7 beschrieben, die Datentore 5b und 6b durchlässig, so daß vom Modul auf die zugeordneten Busse X2 und Y1 originär ausgesendet werden kann. Soll der Modul nicht originär senden, dann verschwindet das Sendekommando SE und mit dem Ausgangssignal des UND-Gatters 33 wird das Datentor 7a durchlässig gesteuert, während die Richtungssteuerung R, wie auch aus Figur 7 ersichtlich, je nach vorliegendem Kopplungsfall eines der Datentore 5a, 6s für Empfangsrichtung in das Modul durchlässig macht und je nach Kopplungsfall das andere Datentor zur Weitergabe der empfangenen Nachricht an den anderen Bus ankoppelt. Zur Fehlerüberwachung sind zwei Datenkomparatoren 34 und 35 vorgesehen, welche zu jedem Augenblick die vor und hinter den bidirektionalen Kopplern 5 bzw. 6 auftretenden Dateninformationen miteinander vergleichen und bei Nichtübereinstimmen derselben an die UND-Gatter 36 und 37 ein Fehlersignal geben, welches über ein ODER-Gatter 37 zum Fehlersignal ER verknüpft und auf eine allen Modulen gemeinsame Fehlersammelleitung LE gegeben wird. Für den Fall, daß die von dem moduleigenen Fehlerprozessor gelieferten internen Abschaltsignale X-OFF und Y-OFF vorhanden sind, wird die Aussendung eines Fehlersignals mittels der UND-Gatter 36 bzw. 37 unterbunden.

Das mit der erfindungsgemäßen Busmatrix realisierbare Prinzip der hochsicheren Informationsverteilung samt dezentraler Steuerung der Informationsflußrichtung und Fehlerbehandlung läßt sich bei gesteigerten Sicherheitsanforderungen auch auf die Fehlermeldungen und auf die moduleigenen Stromversorgungen übertragen, wenn diese jeweils durch ein eigenes Matrixbussystem miteinander verbunden werden.

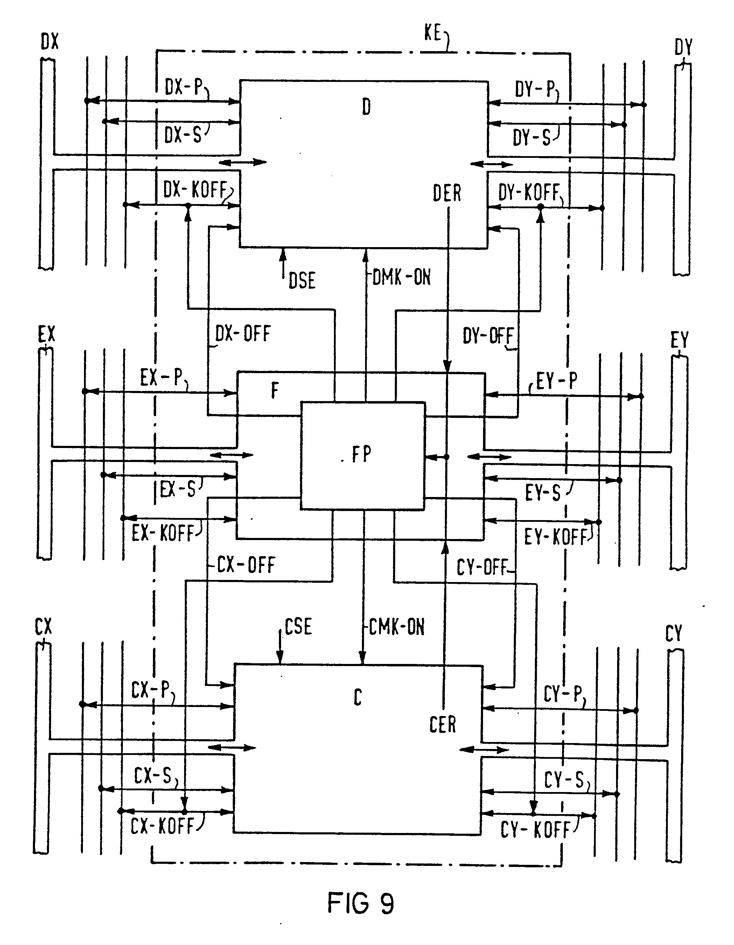

Figur 9 zeigt ein Blockschaltbild für eine dementsprechende Erweiterung der Koppeleinrichtung KE Eines Moduls, welche wiederum stellvertretend für die Koppeleinheiter aller übringen Module ist. Die in Figur 9 dargestellte Koppeleinheit zerfällt in drei mit D, F und C bezeichneten Teile, von denen der mit D bezeichnete für den Datenverkehr vorgesen ist und der in Figur 5 daregestellten Koppeleinheit KE entspricht, mit der Ausnahme, daß in Figur 9 Fehlerprozessoren FP und Taktgeber TG in den mit F bezeichneten, der Fehlerbehandlung zugeordneten Teil der Koppeleinheit ausgelagert sind. Ein weiterer Unterschied besteht bei dieser Erweiterung darin, daß das von den Datenkomparatoren erzeugte Fehlersignal DER nicht auf eine Fehlersammelleitung gegeben wird, sondern über den Fehlerprozessor FP auf ein zweites Bussystem, von welchem die mit EX und EY bezeichneten Busse dem in Figur 9 dargestellten Modul zugeordnet sind und welches im übrigen bezüglich der Busbegleitleitungen entsprechend Figur 5 und bezüglich des matrixartigen Gesamtaufbaus gemäß Figur 1 ausgebildet ist. Die Steuerung des Informationsflusses sowie die Kopplung der Fehlerbusse EX und EY erfolgen in genau gleicher Weise wie zuvor beschrieben.

Der Teil C der Koppeleinheit KE ist der moduleigen Stromversorgung zugeordnet, welche über einem Matrixschienensystem angehörende Stromschienen CX und CY in genau der gleichen Weise wie die Datenbusse mit den Stromversorgungseinrichtungen der übrigen Modulen verbunden sind. Kopplung sowie die Steuerung der Stromversorgung erfolgt dezentral in der gleichen Weise wie bei der Informationsverteilung über die Datenbusse. In Analogie zu den Datentoren der in Figur 8 dargestellten bipolaren Koppler 5 und 6 weist die Stromversorgungskopplungseinrichtung C schaltbare Halbleiterschalter in Form von Transistoren, Thyristoren oder Feldeffekttransistoren auf, mit denen die moduleigene Stromversorgungseinheit bidirektional an die Busse ankoppelbar und von Bus zu Bus eine Energieübertragung ermöglicht wird. Damit ist eine überaus hochsichere Stromversorgung gewährleistet, denn bei Ausfall der moduleigenen Stromversorgung kann der entsprechende Modul mehrfach redundant von den übrigen Modulen versorgt werden. In Analogie zu den Datentoren des Teils D werden vor und hinter den Stromtoren entsprechende Spannungen miteinander verglichen und bei Nichtübereinstimmung derselben ein Fehlersignal CER auf den moduleigenen Fehlerprozessor gegeben, welcher dieses auf einen Kanal des Fehlerbussystems aussendet. Von dort kann es von allen Fehlerprozessoren empfangen werden, deren Fehlersuchprogramm um einen auf das Stromversorgungssystem bezogenen Teil erweitert ist.

Zweckmäßig kann es sich auch erweisen, das bei der Anordnung gemäß Figur 5 auf eine gemeinsam allen Modulen zugeordnete Taktleitung LT gegebene Taktsignal der moduleigenen Taktgeber ebenfalls auf einen Kanal im Fehlerbusmatrixsystem auszusenden und von dort zu empfangen. Auf diese Weise erhält man eine hochsichere, da mehrfach redundante Taktversorgung.

Zur Erreichung einer noch größeren Übertragungssicherheit und einer erheblich vermehrten Anzahl von miteinander koppelbaren Modulen kann die in Figur 1 dargestellte zweidimensionale Busmatrix durch eine zusätzliche Gruppe von Bussen zu einer dreidimensionalen Busmstrix erweitert werden. Jede Koppeleinheit erhält dann drei bidirektionale Koppler zur Kopplung mit den drei jedem Modul matrixartig zugeordneten Bussen, wobei die Kopplungsstrategie unverändert beibehalten werden kann und nur die Fehlerbehandlungsprogramme entsprechend zu erweitern wären. In entsprechender Weiterführung läßt sich selbstverständlich auch eine beliebig mehrdimensionale Busmatrix realisieren.

Insgesamt gesehen, wird also mit vorliegender Erfindung eine sehr flexible sowohl nach Verabeitungsumfang als auch nach Zuverlässigkeit und Verfügbarkeit in stets gleichbleibenden Schritten modular aufbaufähige Anordnung zur Verbindung einer großen Anzahl untereinander kommunizierender datenverarbeitender Einrichtungen geschaffen, die - bei vertretbarem Aufwand - auch extremen Anforderungen an die Betriebssicherheit genügen kann.

**Patentansprüche**

1. Anordnung zur Kopplung von digitalen Verarbeitungseinheiten (Module) eines insbesondere redundant arbeitenden Multiprozessorsystems, wobei ein externes Bussystem aus zwei Gruppen besteht, denen die Module matrixartig zugeordnet sind und jeder Modul zwei mit einer Richtungssteuerung versehene bidirektionale Koppler aufweist, über welche jeweils die externen Busse mit einem moduleigenen, internen Bus unter Verwendung des von sendenden Modulen bestimmten Signalzustandes von die Busse begleitenden Statusleitungen so verbindbar sind, daß ein gesendetes Signal an alle externe Busse weitergesendet wird und gleichzeitig nur von einem interne Bus empfangen werden kann, dadurch gekennzeichnet, daß jedem externen Bus (Y1) eine erste Statusleitung (LY1-P) zugeordnet ist, welche dann Signal führt, wenn der jeweilige Bus von einem originär sendenden Modul gespeist ist (primäre Busspeisung), während eine zweite, ebenfalls jedem externen Bus (Y1) zugeordnete Statusleitung (LY1-S) dann Signal führt, wenn der jeweilige Bus von einem ein originär gesendetes Signal weitersendenden Modul gespeist ist (sekundäre Busspeisung) und die Richtungssteuerung der bidirektionalen Koppler so ausgebildet ist, daß vorrangig die Information primär gespeister Busse weitergesendet wird.

2. Anordnung nach Anspruh 1, gekennzeichnet durch folgende Merkmale;

a) Der Signalzustand vor und hinter jedem bidirektionalen Koppler (5, 6) wird mit je einem Komparator (34, 35) überwacht und die Signale (ER) aller Komparatoren aktivieren über eine gemeinsame Fehlersammelleitung (LE) moduleigene Fehlerprozessoren (FP);

b) die Fehlerprozessoren arbeiten zeitlich koordinierte, identische Befehlsfolgen ab, deren Ablauf von moduleigenen, sich über eine gemeinsame Taktleitung (LT) gegenseitig synchronisierende Taktgeber bestimmt ist;

c) die Fehlerprozessoren geben in Abhängigkeit vom Signalzustand der Fehlersammelleitung moduleigene Signale (X-OFF, Y-OFF) aus, mit denen ein oder mehrere, programmgesteuert bestimmte, Module abkoppelbar sind.

3. Anordnung nach Anspruch 2, gekennzeichnet durch jeden Bus begleitende externe Abschaltleitungen (LX2-KOFF, LY1-KOFF), welche jeweils mit den dem Bus zugeordneten Modulen verbunden sind und von Fehlerprozessoren dieser Module parallel mit Abschaltsignalen (X2-KOFF, Y1-KOFF) beaufschlagbar sind, wobei in jedem Modul die beiden zugeführten Abschaltsignale konjunktiv zur Abkopplung dieses Moduls von beiden, ihm zugeordneten Bussen verknüpft sind.

4. Anordnung nach Anspruch 3, dadurch gekennzeichnet, daß zur Ankopplung des internen Busses an die beiden Koppelglieder ein weiteres bidirektionales Koppelglied (7) vorgesehen ist, welches mit einem vom moduleigenen Fehlerprozessor gelieferten Signal (MK-ON) betätigbar ist.

5. Anordnung nach einem der Ansprüche 2 bis 4, dadurch gekennzeichnet, daß ein weiteres Matrixbussystem für die Übertragung der Fehlermeldungen (EXm, EYn) zu und von den Fehlerprozessoren der Modulen vorgesehen ist.

6. Anordnung nach einem der Ansprüche 1 bis 4, gekennzeichnet durch ein weiteres Matrix-Stromschienensystem (CXm, CYn) zur Sicherung und gegenseitigen Stützung der Stromversorgung der Module bei Ausfall ihrer moduleigenen Stromquellen.

7. Anordnung nach einem der Ansprüche 1 bis 6, gekennzeichnet durch eine dritte Gruppe von Bussen, denen die Module matrixartig zugeordnet sind.

**Claims**

1. An arrangement for coupling digital processing units (modules) of a multi-processor system, which in particular operates in a redundant fashion, wherein an external bus system comprises two groups, to which the modules are allocated in a matrix-like fashion and each module has two bidirectional couplers which are provided with a direction control unit and by means of which the external busses can be respectively connected to a module-owned internal bus employing the signal state, which is determined by transmitting modules, of status lines which accompany the busses, in such a manner that a transmitted signal is retransmitted to all external busses and can simultaneously only be received by one internal bus, characterised in that each external bus (Y1) is assigned a first status line (LY1-P) which carries a signal if the respective bus is fed by an originally transmitting module (primary bus feed), whereas the second status line (LY1-S) which is likewise assigned to each external bus (Y1) carries a signal if the respective bus is fed by a module which retransmits an originally transmitted signal (secondary bus feed) and the direction control unit of the bidirectional couplers is designed to be such that as a priority the information of primarily fed busses is retransmitted.

2. An arrangement as claimed in claim 1, characterised by the following features:

a) the signal state before and after each bidirectional coupler (5, 6) is respectively monitored by a comparator (34, 35) and the signals (ER) of all comparators activate module-owned error processors (FP) by means of a common error collecting line (LE);

b) the error processors process identical instruction sequences which are coordinated in terms of time and whose execution is determined by module-owned clock pulse generators which synchronise one another by means of a common clock pulse line (LT);

c) in dependence upon the signal state of the error collecting line, the error processors transmit module-respective signals (X-OFF, Y-OFF), by means of which one or a plurality of modules, which are determined in a programme-controlled fashion, can be decoupled.

3. An arrangement as claimed in claim 2, characterised by external disconnecting lines (LX2-KOFF LY1-KOFF) which accompany each bus and which are respectively connected to the modules assigned to the bus and which can be supplied in parallel with disconnecting signals (X2-KOFF, Y1-KOFF) from error processors of these modules, where in each module the two supplied disconnecting signals are conjunctively coupled in order to decouple the modules from both busses assigned thereto.

4. An arrangement as claimed in claim 2, characterised in that in order to couple the internal bus to the two coupling elements there is provided a further bidirectional coupling element (7) which is controllable by a signal (MK-ON) supplied by the module-owned error processor.

5. An arrangement as claimed in one of claims 2 to 4, characterised in that there is arranged a further matrix bus system for the transmission of the error messages (EXm, EYn) to and from the error processors of the modules.

6. An arrangement as claimed in one of claims 1 to 4, characterised by a further matrix bus bar system (CXm, CXn) for safeguarding and for the mutual support of the current supply of the modules when its module-owned current sources are cut out.

7. An arrangement as claimed in one of claims 1 to 6, characterised by a third group of busses, to which the modules are assigned in a matrix-like fashion.

**Revendications**

1. Dispositif pour accoupler des unités de traitement numériques (modules) d'un système à multiprocesseurs travaillant notamment de façon redondante, un système de bus externe étant constitué de deux groupes auxquels les modules sont associés selon un type matriciel, et chaque module possédant deux coupleurs bidirectionnels comportant un dispositif de commande directionnelle et au moyen desquels respectivement les bus externes peuvent être reliés à un bus interne propre à chaque module, moyennant l'utilisation de l'état de signal déterminé par des modules émetteurs, de lignes de transmission d'état accompagnant les bus, de sorte qu'un signal émis est retransmis à tous les bus externes et ne peut être reçu simultanément que par un bus interne, caractérisé par le fait qu'à chaque bus externe (Y1) est associée une première ligne de transmission d'état (LY1-P) qui véhicule un signal lorsque le bus respectif est alimenté par un module émettant à l'origine (alimentation de bus en mode primaire), tandis qu'une seconde ligne de transmission d'état (LY1-S) associée également à chaque bus externe (Y1) véhicule un signal lorsque le bus respectif est alimenté par un module retransmettant un signal émis à l'origine (alimentation de bus en mode secondaire), et le dispositif de commande directionnelle des coupleurs bidirectionnels est agencé de sorte que l'information des bus alimentés en mode primaire est retransmise en priorité.

2. Dispositif suivant la revendication 1, remarquable par les caractéristiques suivantes:

a) l'état du signal en amont et en aval de chaque coupleur bidirectionnels 5, 6 est contrôlé par des comparateurs respectifs (34, 35) et les signaux (ER) de tous les comparateurs activent des processeurs de traitement de défauts(ST), qui sont propres aux modules, par l'intermédiaire d'une ligne commune (LE) de collecte de défauts.

b) les processeurs de traitement de défauts élaborent des suites de défauts coordonnés dans le temps et identiques, dont l'acheminement est déterminé par des générateurs de cadence qui sont propres aux modules et qui se synchronisent réciproquement par l'intermédiaire d'une ligne commune de transmission de cadence (LT),

c) les processeurs de traitement de défauts délivrent, en fonction de l'état de signal de la ligne de collecte de défauts, des signaux (X-OFF, Y-OFF) propres aux modules et à l'aide desquels un ou plusieurs modules déterminés d'une manière commandée par programme peuvent être désaccouplés.

3. Dispositif selon la revendication 2, caractérisé par des lignes externes de débranchement (LX2-KOFF, LY1-KOFF) accompagnant chaque bus et qui sont reliées respectivement aux modules associés au bus, et peuvent être chargées parallèment par les processeurs de traitement de défauts de ces modules, par des signaux de débranchement (X2-KOFF, YI-KOFF), auquel cas dans chaque module les deux signaux de débranchement envoyés sont combinés selon le mode ET de manière à désaccoupler ce module des deux bus qui lui sont associés.

4. Dispositif suivant la revendication 2, caractérisé par le fait que pour réaliser l'accouplement du bus interne aux deux organes d'accouplement, il est prévu un autre organe de couplage bidirectionnel (7), qui peut être actionné par un signal (HK-ON) délivré par le processeur de traitement de défauts, qui est propre au module.

5. Dispositif suivant l'une des revendications 2 à 4, caractérisé par le fait qu'un autre système de bus de type matriciel est prévu pour la transmission des signalisations de défauts (EXn, EYn) en direction et en provenance des processeurs de traitement de defauts des modules.

6. Dispositif suivant l'une des revendications 1 à 4, caractérisé par un autre système de barres omnibus de type matriciel (CXn, CYn) servant à garantir et à permettre l'assistance réciproque d'alimentation en énergie des modules dans le cas d'une défaillance des sources de courant qui leur sont propres.

7. Dispositif suivant l'une des revendications 1 à 6, caractérisé par un troisième groupe de bus, dont les modules sont associés selon le mode matriciel.

FIG 1

FIG 2

FIG 3

FIG 4

FIG 5

FIG 6

| Fall | e1 | e2 | e3 | e4 | e5 & e6 | e7 | e8 | e9 | a1 | a2 | a3 | a4 |
|------|----|----|----|----|---------|----|----|----|----|----|----|----|
| I | 0 | – | – | 0 | L | – | – | 0 | L | 0 | 0 | L |
| II | 0 | – | – | 0 | 0 | – | – | L | 0 | L | 0 | 0 |
| III | L 0 0 0 | – L – 0 | – 0 L 0 | 0 0 0 0 | 0 0 0 0 | – – L 0 | – L – 0 | 0 0 0 0 | 0 | 0 | L | 0 |
| IV | 0 0 | – 0 | 0 0 | 0 0 | 0 0 | L 0 | – L | 0 0 | L | 0 | L | 0 |
| V | 0 0 | – L | L 0 | 0 0 | 0 0 | 0 0 | – 0 | 0 0 | 0 | L | 0 | L |
| VI | – | – | – | L | – | – | – | – | 0 | 0 | 0 | 0 |

FIG 7

FIG 8

9

FIG 9